# FASCICULE DE BREVET EUROPEEN

(11) **EP 2 516 263 B1**
(45) Date de publication et mention de la délivrance du brevet: **10.09.2014**
(21) Numéro de dépôt: 10810852.3
(22) Date de dépôt: 20.12.2010
(51) Int. Cl.: B64C 11/26, B64C 27/473

(54) **PALE D'HELICE D'AERONEF**
FLUGZEUGPROPELLERSCHAUFEL
AIRCRAFT PROPELLER BLADE

(30) Priorité: 21.12.2009 FR 0959285
(43) Date de publication de la demande: 31.10.2012
(73) Titulaire: Snecma, 75015 Paris (FR)
(72) Inventeur: COUPE, Dominique, F-33185 Le Haillan (FR); DAMBRINE, Bruno, Jacques, Gérard, F-77820 Le Chatelet En Brie (FR); MAHIEU, Jean-Noël, F-75014 Paris (FR)
(74) Mandataire: Desormiere, Pierre-Louis
(86) Numéro de dépôt international: PCT/FR2010/052829
(87) Numéro de publication internationale: WO 2011/083250

(56) Documents cités:
- EP-A1- 1 526 285
- WO-A2-2006/136755
- FR-A- 1 379 356
- US-A- 3 476 625
- US-A- 3 484 174
- US-A- 4 648 921
- US-A1- 2003 156 944

## Description

### Arrière-plan de l'invention

La présente invention se rapporte au domaine des pales d'hélice pour aéronefs telles que celles présentes sur les turbopropulseurs.

Les pales d'hélice pour turbopropulseurs sont généralement réalisées en matériau métallique. Si les pales d'hélices en matériau métallique ont une bonne résistance mécanique, elles présentent toutefois l'inconvénient d'avoir une masse relativement importante.

Afin d'obtenir des pales d'hélice plus légères, il est connu de réaliser des pales d'hélices en matériau composite, c'est-à-dire en réalisant des pièces de structure à renfort fibreux et matrice résine.

La technique généralement utilisée consiste à former un empilement de plis ou nappes unidirectionnels pré-imprégnés (drapage) que l'on place dans un moule en orientant différemment les plis successifs, avant compactage et polymérisation à l'autoclave. Un exemple de réalisation d'une pale d'hélice selon cette technique est notamment décrite dans le document US 6 666 651.

Cette technique très délicate nécessite d'effectuer les opérations d'empilage de plis de manière manuelle, ce qui est long et coûteux. En outre, cette structure stratifiée n'est pas optimale, notamment vis-à-vis des chocs ou impacts qui peuvent entraîner des délaminages.

Le document EP 1 526 285 décrit un procédé plus performant pour la fabrication d'une aube de turbomachine en matériau composite, l'aube étant fabriquée par tissage tridimensionnel d'une préforme fibreuse et densification de la préforme par une matrice organique. Ce procédé permet d'obtenir des aubes ayant une résistance mécanique très élevée, notamment vis-à-vis des chocs ou impacts, sans risque de délaminage. Toutefois, des pales d'hélices de grandes dimensions réalisées suivant cette technique présentent encore une masse relativement élevée. Or, pour l'amélioration des performances des turbopropulseurs en particulier en matière de consommation, la diminution de masse est recherchée. US 4648921A est considéré l'état de la technique le plus proche.

### Objet et résumé de l'invention

Il est donc souhaitable de pouvoir disposer de pales d'hélice pour aéronefs présentant une masse globale réduite tout en ayant les propriétés mécaniques requises.

A cet effet, selon l'invention, il est proposé une pale d'hélice d'aéronef dont la structure à profil aérodynamique comprend au moins un renfort fibreux obtenu par tissage tridimensionnel de fils et densifié par une matrice et une pièce de conformation en matériau rigide alvéolé de forme déterminée, le renfort comportant au moins deux portions liées entre elles par tissage continu au niveau du bord d'attaque de la pale d'hélice, les deux portions enserrant ladite pièce de conformation.

La pale d'hélice de l'invention présente à la fois une masse globale allégée, par la présence d'une pièce de conformation en matériau à faible densité, et une résistance mécanique importante par la présence en peau d'une structure en matériau composite (renfort fibreux densifié par une matrice). La pale d'hélice présente en outre une très bonne résistance vis-à-vis des chocs ou impacts puisque la partie du renfort fibreux constituant le bord d'attaque comporte à cet endroit une forte cohésion obtenue par un tissage continu.

Selon un mode de réalisation, la pale de l'invention comprend en outre une poutre dont une première partie est disposée à l'intérieur de la structure à profil aérodynamique et entourée au moins partiellement par la pièce de conformation et une deuxième partie s'étendant à l'extérieur de ladite structure et comportant à son extrémité un pied de pale.

La poutre est de préférence formée d'un renfort fibreux densifié par une matrice.

La première partie de la poutre peut comporter une portion renflée formant un élément de retenue de la poutre dans la structure à profil aérodynamique.

Selon un autre mode de réalisation, la pale d'hélice selon l'invention comprend en outre un pied de pale formé d'un renfort fibreux densifié par une matrice, le renfort fibreux du pied de pale étant tissé en continu avec le renfort fibreux de la structure à profil aérodynamique.

Selon une caractéristique de l'invention, les deux portions du renfort fibreux enserrant la pièce de conformation sont partiellement séparées par une zone de déliaison obtenue lors du tissage tridimensionnel.

Les deux portions du renfort fibreux peuvent comporter une ou plusieurs surépaisseurs sur leur face en regard qui forment des raidisseurs.

La structure à profil aérodynamique peut notamment comprendre un renfort en fibres de carbone densifié par une matrice carbone.

L'invention vise aussi un procédé de fabrication d'une pale d'hélice d'aéronef comprenant au moins:
- la réalisation d'une ébauche fibreuse en une seule pièce par tissage tridimensionnel de fils, l'ébauche comprenant au moins une première partie comportant au moins deux portions liées entre elles par tissage continu au niveau du bord d'attaque de la pale d'hélice,
- la formation d'une pièce de conformation en matériau rigide alvéolé de forme déterminée,
- mise en forme de l'ébauche fibreuse par enserrement de la pièce de conformation entre les deux portions de l'ébauche fibreuse pour obtenir une préforme de structure à profil aérodynamique,
- la densification de la préforme par une matrice pour obtenir une structure à profil aérodynamique ayant un renfort fibreux constitué par ladite préforme et densifié par la matrice.

Selon un mode de réalisation, le procédé de l'invention comprend en outre la réalisation d'une poutre par tissage tridimensionnel d'une ébauche fibreuse et par densification de ladite ébauche par une matrice pour obtenir une poutre en matériau composite ayant un renfort fibreux densifié par la matrice, la poutre comprenant un mât et un pied de pale et, lors de la mise en forme de l'ébauche fibreuse, la disposition du mât de la poutre entre les deux portions de l'ébauche fibreuse, le mât étant entouré au moins partiellement par la pièce de conformation.

Le procédé peut comprendre en outre la formation d'au moins une portion renflée sur le mât de la poutre, la portion renflée étant réalisée en faisant varier le titre et/ou la contexture des fils de l'ébauche ou par introduction d'un insert lors du tissage tridimensionnel.

Selon une variante de réalisation de la poutre, l'ébauche fibreuse de celle-ci est tissée sous forme d'une bande fibreuse qui est ensuite repliée autour d'un insert pour former le pied de pale, une pièce d'âme en matériau rigide alvéolé étant insérée entre les deux parties repliées de la bande fibreuse.

Selon un autre mode de réalisation de l'invention, l'ébauche fibreuse de la structure à profü aérodynamique comprend en outre une deuxième partie tissée en continu avec la première partie de ladite ébauche et en ce que ladite deuxième partie forme, après densification, un pied de pale.

Selon une caractéristique de l'invention, les deux portions de l'ébauche fibreuse sont partiellement séparées par formation d'une zone de déliaison lors du tissage tridimensionnel.

Selon encore un autre mode de réalisation, la mise en forme de l'ébauche fibreuse est réalisée par repliement des deux portions de l'ébauche fibreuse sur la pièce de conformation.

Le procédé peut comprendre en outre la formation d'au moins une surépaisseur formant raidisseur sur les faces en regard des deux portions de l'ébauche.

L'invention a également pour objet un turbopropulseur équipé d'une pale d'hélice selon l'invention.

L'invention vise encore un aéronef équipé d'au moins un turbopropulseur selon l'invention.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue en perspective d'une pale d'hélice d'aéronef conformément à un mode de réalisation de l'invention,
- la figure 2 est une vue en perspective d'un turbopropulseur équipé d'une pluralité de pale d'hélice selon l'invention,
- la figure 3 est une vue schématique illustrant le tissage 3D d'une ébauche fibreuse pour la fabrication de la pale d'hélice de la figure 1,
- les figures 4A et 4B sont des vues en coupe partielles à échelle agrandie d'un ensemble de couches de fils formant l'ébauche de la figure 1,
- la figure 5 est une vue éclatée montrant la réalisation de la pale d'hélice de la figure 1,
- la figure 6 est une vue en coupe trame montrant un exemple de disposition de fils de trame dans une partie d'ébauche fibreuse correspondant à une partie de pied de pale,
- les figures 7A à 7C montrent la réalisation d'une poutre conformément à un mode de réalisation de l'invention,
- la figure 8 est une vue en coupe de la pale d'hélice de la figure 1,
- la figure 9 est une vue éclatée montrant la réalisation d'une pale d'hélice d'aéronef conformément à un autre mode de réalisation de l'invention,
- la figure 10 est une vue schématique illustrant le tissage 3D d'une ébauche fibreuse pour la fabrication de la pale d'hélice de la figure 11,
- la figure 11 est une vue en perspective montrant une pale d'hélice obtenue à partir des éléments présentés dans la figure 9,
- la figure 12 est une vue en coupe de la pale d'hélice de la figure 11,
- la figure 13 est une vue éclatée montrant la réalisation d'une pale d'hélice d'aéronef conformément à un autre mode de réalisation de l'invention,
- la figure 14 est une vue schématique illustrant le tissage 3D d'une ébauche fibreuse pour la fabrication de la pale d'hélice de la figure 15,
- la figure 15 est une vue en perspective montrant une pale d'hélice obtenue à partir des éléments présentés dans la figure 13.

### Description détaillée de modes de réalisation

L'invention s'applique d'une manière générale à différents types de pale d'hélices utilisées dans des moteurs d'aéronefs tels que des avions ou des hélicoptères. L'invention trouve une application avantageuse mais non exclusive dans des pales d'hélice de grandes dimensions qui, en raison de leur taille, présentent une masse importante ayant un impact significatif sur la masse globale du moteur de l'aéronef.

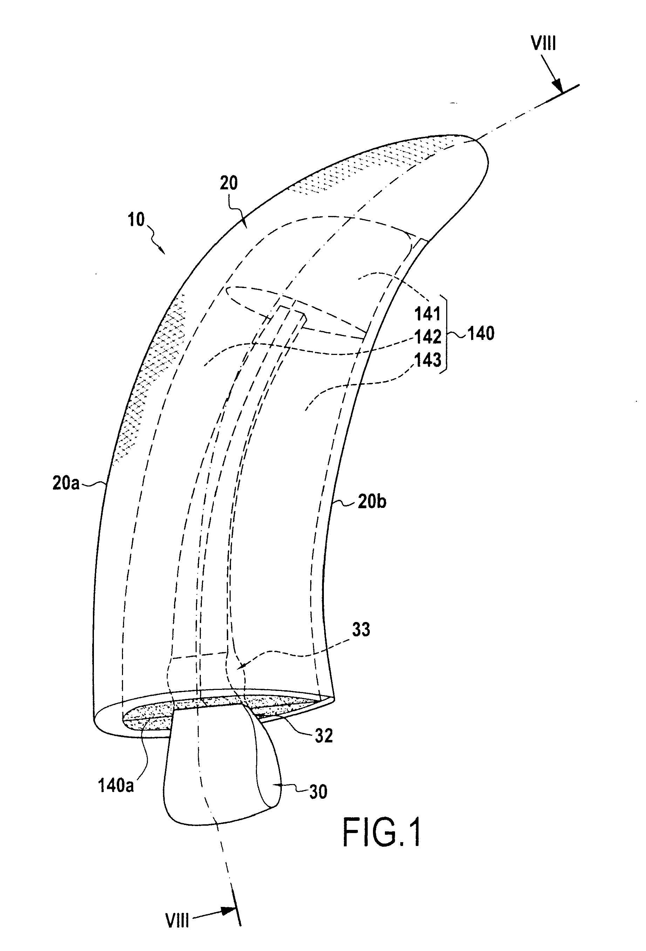

La figure 1 représente une pale d'hélice 10 destinée à être montée sur un turbopropulseur d'avion qui comprend, de façon en soi bien connue, une structure à profil aérodynamique 20 destinée à former la partie aérodynamique de la pale, un pied 30 formé par une partie de plus forte épaisseur, par exemple à section en forme de bulbe, prolongé par une échasse 32. La structure à profil aérodynamique 20 présente en section transversale un profil incurvé d'épaisseur variable entre son bord d'attaque 20a et son bord de fuite 20b.

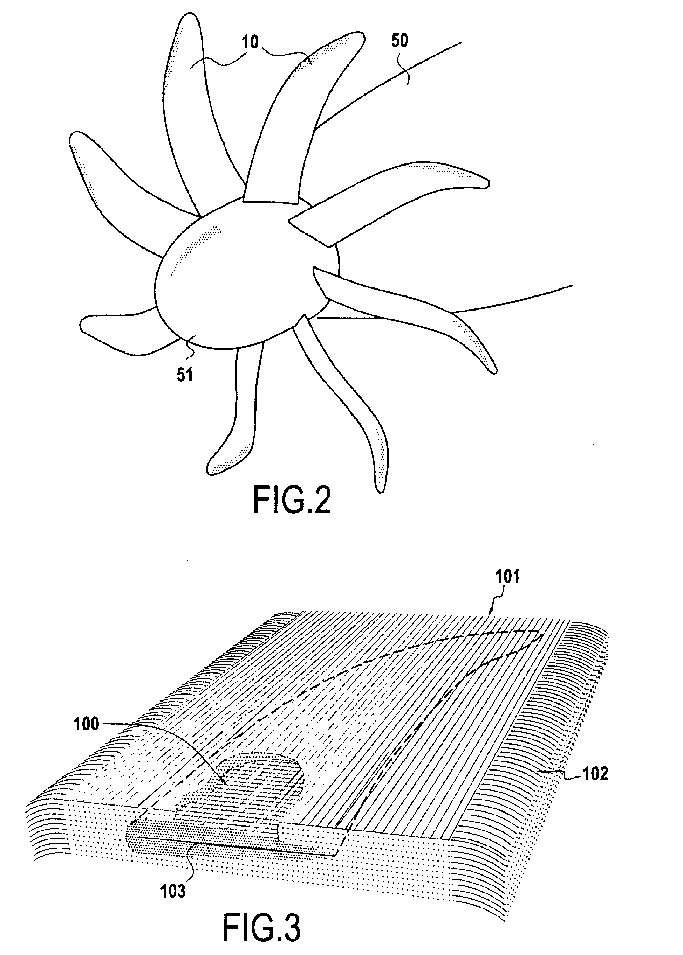

Comme illustré sur la figure 2, la pale 10 est montée sur un rotor 51 de turbopropulseur 50 par engagement du pied 30 dans un logement aménagé à la périphérie du rotor 51 (non représenté sur la figure 2).

La figure 3 montre très schématiquement une ébauche fibreuse 100 destinée à former la préforme fibreuse de la structure à profil aérodynamique de la pale.

L'ébauche fibreuse 100 est obtenue, comme illustrée schématiquement sur la figure 3, par tissage tridimensionnel (3D) réalisé de façon connue au moyen d'un métier à tisser de type jacquard sur lequel on a disposé un faisceau de fils de chaînes 101 ou torons en une pluralité de couches de plusieurs centaines de fils chacune, les fils de chaînes étant liés par des fils de trame 102.

Dans l'exemple illustré, le tissage 3D est un tissage à armure "interlock". Par tissage "interlock", on entend ici une armure de tissage dans laquelle chaque couche de fils de trame lie plusieurs couches de fils de chaîne avec tous les fils d'une même colonne de trame ayant le même mouvement dans le plan de l'armure.

D'autres types de tissage tridimensionnel connus pourront être utilisés, comme notamment ceux décrits dans le document WO 2006/136755_{.} Ce document décrit notamment la réalisation par tissage en une seule pièce de structures fibreuses de renfort pour des pièces telles que des aubes ayant un premier type d'armure à coeur et un deuxième type d'armure en peau qui permettent de conférer à la fois les propriétés mécaniques et aérodynamique attendues pour ce type de pièce.

L'ébauche fibreuse selon l'invention peut être tissée à partir de fils de fibre de carbone ou de céramique tel que du carbure de silicium.

Au fur et à mesure du tissage de l'ébauche fibreuse dont l'épaisseur et la largeur varient, un certain nombre de fils de chaîne ne sont pas tissés, ce qui permet de définir le contour et l'épaisseur voulue, continûment variable, de l'ébauche 100. Un exemple de tissage 3D évolutif permettant notamment de faire varier l'épaisseur de l'ébauche entre un premier bord destiné à former le bord d'attaque et un deuxième bord d'une épaisseur moindre et destiné à former le bord de fuite est décrit dans le document EP 1 526 285.

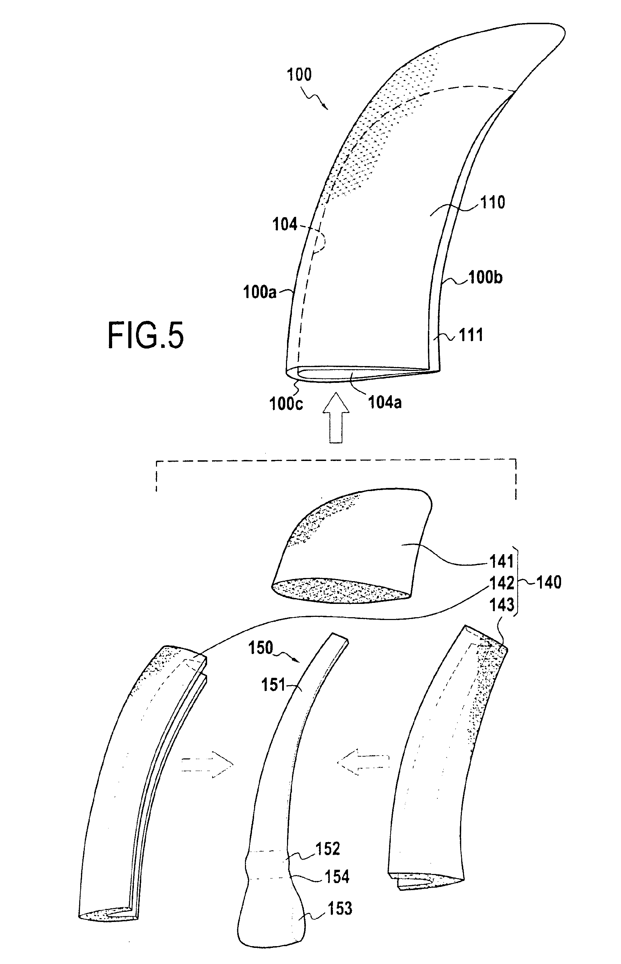

Lors du tissage, une déliaison 103 (figure 3) est réalisée à l'intérieur de l'ébauche fibreuse entre deux couches successives de fils de chaîne et sur une zone de déliaison 104 (figure 5). La zone de déliaison 104 permet de ménager une cavité 104a permettant l'introduction d'une pièce de conformation, et éventuellement d'une poutre, à l'intérieur de l'ébauche fibreuse 100 en vue de la formation de la préforme de la structure à profil aérodynamique.

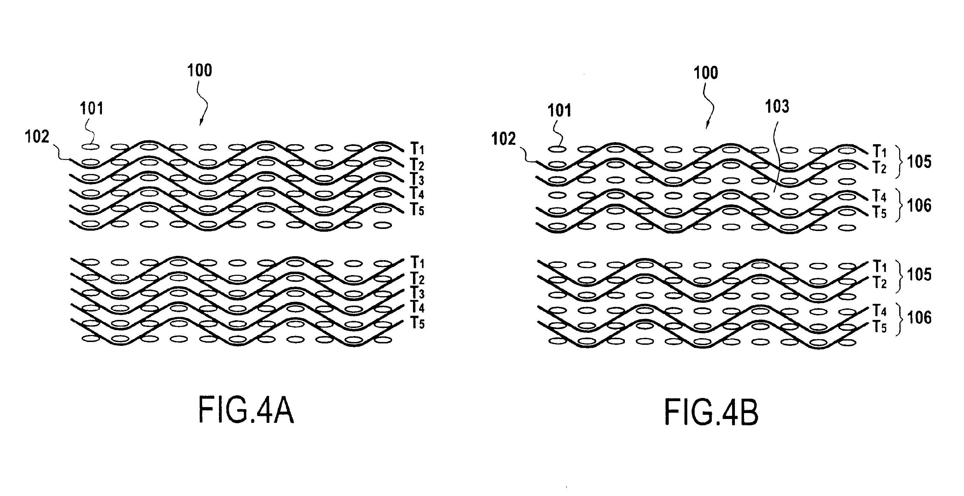

Un mode de tissage 3D à armure interlock de l'ébauche 100 est montré schématiquement par les figures 4A et 4B. La figure 4A est une vue partielle agrandie de deux plans en coupe chaîne successifs dans une partie de l'ébauche 100 ne présentant pas de déliaison, c'est-à-dire dans une zone de l'ébauche située en dehors de la zone de déliaison 104, tandis que la figure 4B montre deux plans en coupe chaîne successifs dans la partie de l'ébauche 100 présentant une déliaison 103 formant la zone de déliaison 104.

Dans cet exemple, l'ébauche 100 comprend 6 couches de fils de chaîne 101 s'étendant dans la direction X. Sur la figure 4A, les 6 couches de fils de chaîne sont liés par des fils de trame T₁ à T₅. Sur la figure 4B, 3 couches de fils de chaîne 101. formant l'ensemble de couches de fils 105 sont liées entre elles par deux fils de trame T₁, T₂, de même que les 3 couches de fils de chaîne formant l'ensemble de couches de fils 106 sont liés par deux fils de trame T₄ et T₅. En d'autres termes, le fait que les fils de trame T₁, T₂ ne s'étendent pas dans les couches de fils 106 et que les fils de trame T₄, T₅ ne s'étendent pas dans les couches de fils 105 assure la déliaison 103 qui sépare l'un de l'autre les ensembles de couches de fils de chaîne 105, 106.

A la fin du tissage (figure 3), on sectionne, par exemple au jet d'eau sous pression, les fils de chaîne et de trame à la limite de la masse tissée pour extraire l'ébauche 100 représentée sur la figure 5 telle qu'elle est issue du tissage 3D et avant toute conformation. La zone de déliaison 104 ménagée lors du tissage permet de former deux portions 110 et 111 tissées indépendamment l'une de l'autre délimitant la cavité 104a à l'intérieur de l'ébauche 100. La cavité 104a est ouverte sur le bord inférieur 100c et sur le bord arrière 100b de l'ébauche 100. Le bord arrière 100b de l'ébauche 100 correspond à la partie destinée à former le bord de fuite 20b de la structure à profil aérodynamique 20 (figure 1).

Conformément à l'invention, le bord avant 100a de l'ébauche fibreuse 100, qui relie des deux portions 110 et 111 et qui est destiné à former le bord d'attaque 20a de la structure à profil aérodynamique de la pale d'hélice, ne comporte pas de déliaison. En reliant les deux portions 110 et 111 par un tissage continu au niveau du bord avant 100a, la structure à profil aérodynamique de la pale d'hélice comporte un renfort fibreux homogène au niveau du bord d'attaque afin de renforcer sa résistance vis-à-vis d'éventuels impacts.

Sur la figure 5, la conformation de l'ébauche fibreuse 100 en une préforme de la structure à profil aérodynamique, est réalisée en introduisant dans la cavité 104a une pièce de conformation en matériau rigide 140 constituée ici de trois éléments complémentaires 141, 142 et 143. Afin de conformer l'ébauche 100 sans augmenter significativement la masse globale de la structure à profil aérodynamique de la pale d'hélice, la pièce 140 est en matériau rigide alvéolé, c'est-à-dire un matériau présentant une faible densité. La pièce de conformation, ou plus précisément dans l'exemple décrit ici les éléments 141 à 143, peuvent être réalisés par moulage ou par usinage dans un bloc de matériau.

La pièce de conformation 140 a une forme correspondant à celle de la structure à profil aérodynamique à réaliser. Elle comporte notamment au niveau de sa partie antérieure 140a (figure 1) une extrémité arrondie qui permet de constituer un bord d'attaque 20a ayant un rayon de courbure suffisamment important pour obtenir une bonne résistance à l'impact et prévenir l'apparition de criques.

Une poutre 150 est en outre insérée à l'intérieur de la cavité 104a entre les trois éléments 141, 142 et 143. La poutre 150 comporte un mât 151 et des première et deuxième parties renflées 152 et 153. La première partie renflée 152 est destinée à former comme décrit plus loin un élément de retenu de la poutre dans le renfort fibreux de la structure à profil aérodynamique tandis que la deuxième partie renflée 153 est destinée à former le pied 30 de la pale d'hélice 10 (figure 1), la partie 154 située entre les parties renflées 152 et 153 étant destinée à former l'échasse 32 de la pale (figure 1).

Une fois les éléments 141 à 143 et la poutre 150 introduits dans la cavité 104a, on procède à la densification de la préforme fibreuse de la structure à profil aérodynamique. Le bord arrière 100b et le bord inférieur 100c de l'ébauche sont de préférence refermés par couture avant la densification.

La densification de la préforme fibreuse consiste à combler la porosité de la préforme, dans tout ou partie du volume de celle-ci, par le matériau constitutif de la matrice.

La matrice du matériau composite constituant la structure à profil aérodynamique peut être obtenue de façon connue en soi suivant le procédé par voie liquide.

Le procédé par voie liquide consiste à imprégner la préforme par une composition liquide contenant un précurseur organique du matériau de la matrice. Le précurseur organique se présente habituellement sous forme d'un polymère, tel qu'une résine, éventuellement dilué dans un solvant. La préforme est placée dans un moule pouvant être fermé de manière étanche avec un logement ayant la forme de la pièce finale moulée et pouvant notamment présenter une forme vrillée correspondant à la forme définitive de la structure à profil aérodynamique. Ensuite, on referme le moule et on injecte le précurseur liquide de matrice (par exemple une résine) dans tout le logement pour imprégner toute la partie fibreuse de la préforme.

La transformation du précurseur en matrice organique, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la structure à profil aérodynamique. La matrice organique peut être notamment obtenue à partir de résines époxydes, telle que la résine époxyde à hautes performances vendue sous la référence PR 520 par la société CYTEC, ou de précurseurs liquides de matrices carbone ou céramique.

Dans le cas de la formation d'une matrice carbone ou céramique, le traitement thermique consiste à pyrolyser le précurseur organique pour transformer la matrice organique en une matrice carbone ou céramique selon le précurseur utilisé et les conditions de pyrolyse. A titre d'exemple, des précurseurs liquides de carbone peuvent être des résines à taux de coke relativement élevé, telles que des résines phénoliques, tandis que des précurseurs liquides de céramique, notamment de SiC, peuvent être des résines de type polycarbosilane (PCS) ou polytitanocarbosilane (PTCS) ou polysilazane (PSZ). Plusieurs cycles consécutifs, depuis l'imprégnation jusqu'au traitement thermique, peuvent être réalisés pour parvenir au degré de densification souhaité.

Selon un aspect de l'invention, la densification de la préforme fibreuse peut être réalisée par le procédé bien connu de moulage par transfert dit RTM ("Resin Transfert Moulding"). Conformément au procédé RTM, on place la préforme fibreuse comprenant les éléments 141 à 143 formant la pièce de conformation 140 et la poutre 150 dans un moule présentant la forme extérieure de la structure à profil aérodynamique. La pièce de conformation 140 étant en matériau rigide et ayant une forme correspondant à celle de la structure à profil aérodynamique à réaliser, elle joue avantageusement le rôle de contre-moule. Une résine thermodurcissable est injectée dans l'espace interne délimité entre la pièce en matériau rigide et le moule et qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

La résine utilisée peut être, par exemple, une résine époxyde. Les résines adaptées pour les procédés RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles doit être soumise la pièce. Une fois la résine injectée dans tout le renfort, on procède à sa polymérisation par traitement thermique conformément au procédé RTM.

Après l'injection et la polymérisation, la pièce est démoulée. Au final, la pièce est détourée pour enlever l'excès de résine et les chanfreins sont usinés. Aucun autre usinage n'est nécessaire puisque, la pièce étant moulée, elle respecte les cotes exigées.

Le matériau rigide alvéolé utilisé pour réaliser les éléments 141 à 143 constitutifs de la pièce de conformation 140 est de préférence un matériau à alvéoles fermées de manière à empêcher la pénétration de la résine dans celui-ci et conserver, ainsi, sa faible densité après densification de la préforme fibreuse.

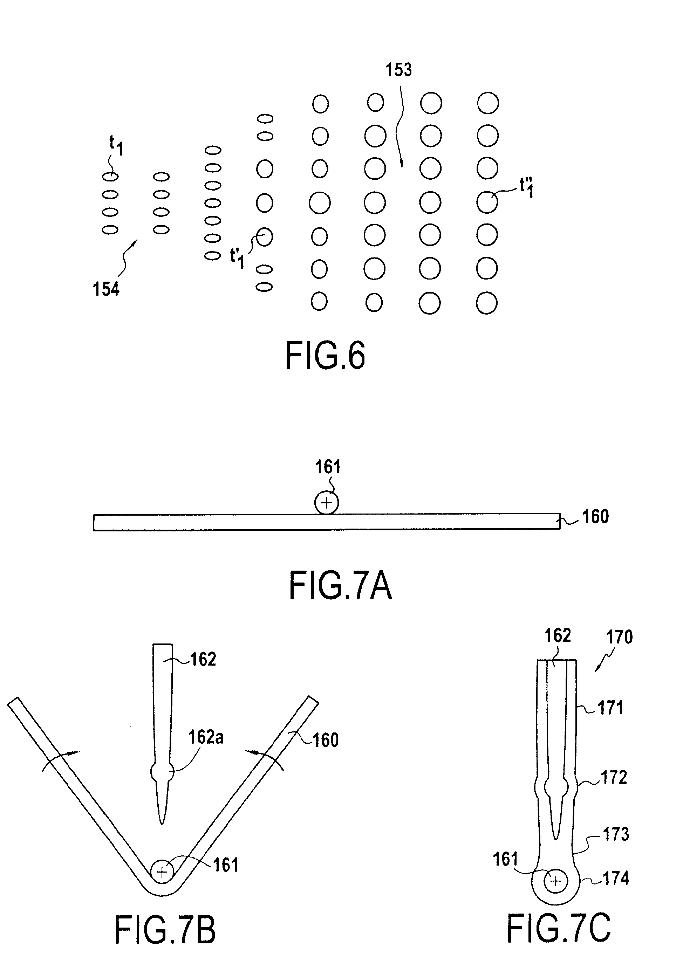

La poutre 150 est réalisée en matériau composite. De même que la structure à profil aérodynamique, on réalise tout d'abord une ébauche fibreuse par tissage 3D, par exemple par tissage 3D à armure interlock. Lors du tissage de l'ébauche fibreuse de la poutre, les première et deuxième parties renflées 152 et 153 peuvent être obtenues en utilisant des fils de trame de plus gros titre et des couches supplémentaire de fils de trame comme le montre par exemple la figure 6.

Sur la figure 6, le nombre de fils de trame passe dans cet exemple de 4 à 7 entre la partie 154 de la bande de l'ébauche fibreuse, correspondant à l'échasse de la pale d'hélice, et la deuxième partie renflée 153 de la bande correspondant au pied de la pale. En outre des fils de trame t1, t'1, t"1 de titres différents (croissants) sont utilisés. La première partie renflée 152 correspondant à l'élément de retenu peut être réalisée de la même manière. On peut en, variante ou en complément faire varier la contexture des fils de chaîne (nombre de fils par unité de longueur en sans trame).

Selon une variante de réalisation, les première et deuxième parties renflées 152 et 153 peuvent être obtenues en introduisant un insert lors du tissage de la bande de l'ébauche fibreuse de la poutre 150. Cet insert peut notamment être réalisé en titane ou avec le même matériau que celui de la matrice du matériau composite de la poutre.

Une fois l'ébauche fibreuse de la poutre réalisée, elle est densifiée par une matrice organique qui peut être déposée comme décrit ci-avant suivant un procédé voie liquide et notamment par imprégnation et polymérisation dans un outillage de conformation ou par moulage par transfert RTM.

Les figures 7A à 7C montrent une variante de réalisation de la poutre selon l'invention. Dans cette variante, on utilise une ébauche fibreuse 160 obtenue par tissage tridimensionnel de type interlock par exemple. Un insert 161 est placé au centre de la bande de l'ébauche 200 (figure 7A). La bande est ensuite repliée sur elle-même autour de l'insert 161 avec introduction d'une pièce d'âme 162 entre les deux parties de la bande repliée (figure 7B). L'insert 161 permet de former une partie renflée destinée à constituer le pied de pale. De même que la pièce de conformation 140, la pièce d'âme 162 est en matériau rigide alvéolé de manière à alléger la masse globale de la poutre. Comme représentée sur la figure 7B, la pièce d'âme peut comporter une partie renflée 162a destinée à former l'élément de retenu de la poutre. Une fois la bande de l'ébauche 160 repliée sur l'insert 161 et la pièce d'âme 162, on procède à la densification de cette dernière par voir liquide comme décrit précédemment pour la préforme de la structure à profil aérodynamique.

Tel qu'illustrée sur la figure 7C, on obtient alors une poutre 170 ayant une âme à faible densité et comportant un mât 171, une première partie renflée 172 correspondant à l'élément de retenu de la poutre, une portion 173 correspondant à l'échasse de la pale d'hélice et une deuxième partie renflée 174 correspondant au pied de la pale.

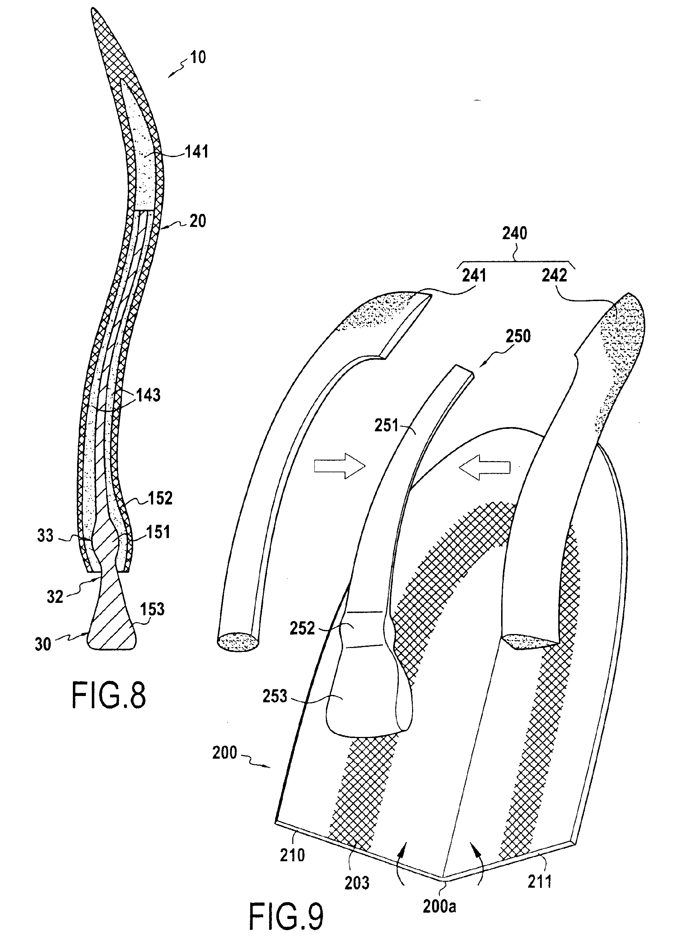

Après densification de la préforme fibreuse de la structure à profil aérodynamique, on obtient telle que représentée sur la figure 1, une pale d'hélice 10 qui comprend une structure à profil aérodynamique 20 en matériau composite (renfort fibreux densifié par une matrice), une pièce de conformation 140 en matériau rigide alvéolé et une poutre 150 en matériau composite. Comme illustrée sur la figure 8, la première partie renflée 151 de la poutre 150 est prise entre les deux éléments 142 et 143 de la pièce de conformation 140 (figure 1) qui sont eux-mêmes enserrés par la structure à profil aérodynamique densifiée 20. La partie renflée 151 constitue ainsi un élément de retenu 33 de la structure à profil aérodynamique sur la poutre 150 (auto-verrouillage) renforçant la liaison entre ladite structure et le pied de la pale d'hélice. On notera que la poutre 150 peut être aussi réalisée sans élément de retenu.

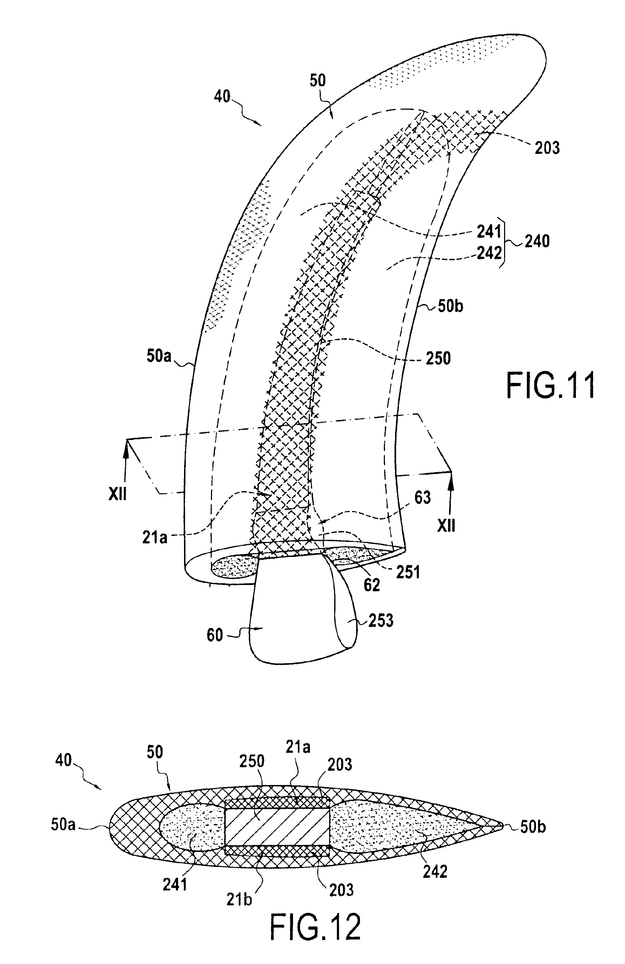

La figure 9 représente un autre mode de réalisation d'une pale d'hélice d'aéronef selon l'invention. Dans ce mode, on réalise une ébauche fibreuse 200 qui correspond au développé de la structure à profil aérodynamique de la pale d'hélice. L'ébauche fibreuse 200 est obtenue, comme illustrée schématiquement sur la figure 11, par tissage 3D, par exemple de type interlock, entre des fils de chaînes 201 ou torons disposés en une pluralité de couches de plusieurs centaines de fils chacune, et des fils de trame 202. Au fur et à mesure du tissage de l'ébauche dont l'épaisseur et la largeur varient, un certain nombre de fils de chaîne ne sont pas tissés, ce qui permet de définir le contour et l'épaisseur voulue, continûment variable, de l'ébauche 200. Dans l'exemple décrit ici, en outre de l'épaisseur globale de l'ébauche, le tissage est contrôlé pour former une surépaisseur 203 sur une face de l'ébauche. La surépaisseur 203 est destinée à constituer un raidisseur dans la structure à profil aérodynamique.

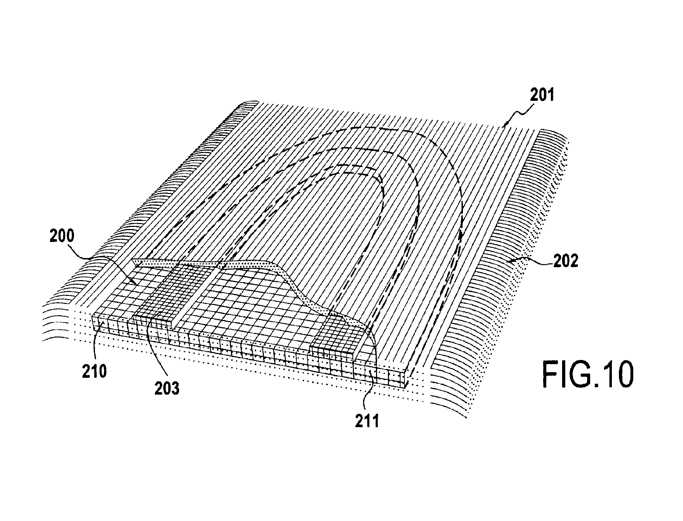

Une fois l'ébauche tissée, les fils de chaîne et de trame non tissés sont sectionnés de manière à obtenir l'ébauche fibreuse représentée sur la figure 10. Deux éléments 241 et 242 formés d'un matériau rigide alvéolé de même nature que celui des éléments 141 à 143 décrits précédemment sont assemblés pour former une pièce de conformation 240 ayant une forme déterminée correspondant à celle de la structure à profil aérodynamique à réaliser. Les deux éléments 241 et 242 sont disposés de chaque côté d'une poutre 250 similaire à la poutre 150 décrit ci-avant et comportant comporte un mât 251, une première partie renflée 252 destinée à former comme décrit plus loin un élément de retenu de la poutre dans le renfort fibreux de la structure à profil aérodynamique et une deuxième partie renflée 253 destinée à former le pied de la pale d'hélice

L'ébauche fibreuse présente deux portions 210 et 211 symétriques reliées entre elles par tissage continu au niveau d'une ligne de pliage 200a destinée à former le bord d'attaque de la structure à profil aérodynamique de la pale d'hélice.

Les deux éléments 241, 242 et la poutre 250 sont placés sur l'une des deux portions 210 et 211, par exemple la portion 211, l'autre portion libre, ici la portion 210, étant alors rabattue sur la portion 211. On procède à la densification de la préforme fibreuse de la structure à profil aérodynamique par voie liquide comme décrit précédemment.

On obtient alors, tel que représenté sur les figures 11 et 12, une pale d'hélice 40 qui comprend une structure à profil aérodynamique 50 en matériau composite (renfort fibreux densifié par une matrice) ayant un bord d'attaque 50a et un bord de fuite 50b, une pièce de conformation 240 en matériau rigide alvéolé et une poutre 250 en matériau composite. La première partie renflée 251 de la poutre 250 est prise entre les deux éléments 241 et 242 de la pièce de conformation 240 qui sont eux-mêmes enserrés par la structure à profil aérodynamique densifiée 40. La partie renflée 251 constitue ainsi un élément de retenu 63 de la structure à profil aérodynamique sur la poutre 250 (auto-verrouillage) renforçant la liaison entre ladite structure et le pied de la pale d'hélice. On notera que la poutre 150 peut être aussi réalisée sans élément de retenu. La partie de la poutre 250 qui s'étend au-delà de la structure à profil aérodynamique 40 par une échasse 62 prolongée par un pied 60 formé par la deuxième partie renflée 253 de la poutre 250.

La surépaisseur 203 formée lors du tissage de l'ébauche fibreuse 200 forme deux raidisseurs 21a et 21b disposés de chaque côté de la poutre 250. Le nombre et la position des raidisseurs ne sont pas limités aux raidisseurs 21a et 21b illustrés sur les figures 11 et 12. En fonction des exigences de raideur et/ou de tenues à l'impact, d'autres raidisseurs peuvent être formés dans la structure à profil aérodynamique. La position, la forme et le nombre de raidisseurs sont définis lors du tissage de l'ébauche fibreuse de la structure à profil aérodynamique comme décrit ci-avant.

On note que, conformément à l'invention, le bord d'attaque 50a correspond à la ligne de pliage reliant les deux portions 210 et 211 de l'ébauche fibreuse. Ainsi, la structure à profil aérodynamique 50 de la pale d'hélice 40 présente une liaison tissée continue au niveau du bord d'attaque afin de renforcer sa résistance à l'impact.

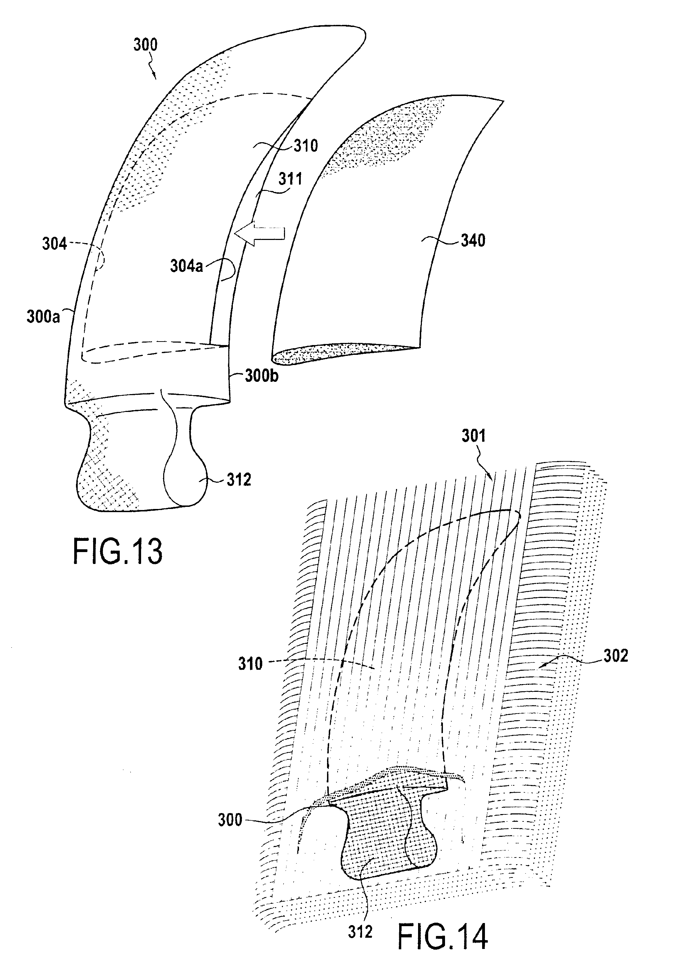

La figure 13 montre encore un autre mode de réalisation d'une pale d'hélice d'aéronef selon l'invention. Dans ce mode, on réalise une ébauche fibreuse 300 qui comprend dans une seule et même pièce tissée une première partie 310 destinée à former la structure à profil aérodynamique de la pale d'hélice et une deuxième partie 312 destinée à former le pied de pale.

L'ébauche fibreuse 300 est obtenue, comme illustrée schématiquement sur la figure 14, par tissage 3D, par exemple de type interlock, entre des fils de chaînes 301 ou torons disposés en une pluralité de couches de plusieurs centaines de fils chacune, et des fils de trame 302. Au fur et à mesure du tissage de l'ébauche dont l'épaisseur et la largeur varient, un certain nombre de fils de chaîne ne sont pas tissés, ce qui permet de définir le contour et l'épaisseur voulue, continûment variable, de l'ébauche 300. La réalisation d'une ébauche fibreuse par tissage 3D d'une aube de turbomachine comprenant une première partie réalisée selon une première armure formant une pale d'aube, correspondant ici à la première partie 310 destinée à former la structure à profil aérodynamique, et une deuxième partie réalisée selon une deuxième armure formant le pied d'aube, correspondant ici à la deuxième partie 312 destinée à former le pied de pale, est décrite dans le document EP 1 526 285.

Lors du tissage, comme expliqué précédemment pour l'ébauche fibreuse 100 en relation avec les figure 3, 4A et 4B une déliaison est réalisée à l'intérieur de l'ébauche fibreuse entre deux couches successives de fils de chaîne et sur une zone de déliaison 304 (figure 13) déliaison 304 permet de ménager une cavité 304a permettant l'introduction d'une pièce de conformation 340 en matériau rigide alvéolé à l'intérieur de l'ébauche fibreuse 300 en vue de la formation de la préforme de la structure à profil aérodynamique.

La deuxième partie 312 de l'ébauche fibreuse présente une forme renflée destinée à former le pied de pale. Comme décrit précédemment pour la poutre 150, la partie 312 peut être obtenue en utilisant des fils de trame de plus gros titre et des couches supplémentaires de fils de trame. On peut en variante ou en complément faire varier la contexture des fils de chaîne (nombre de fils par unité de longueur en sans trame). On peut encore introduire un insert lors du tissage de l'ébauche fibreuse.

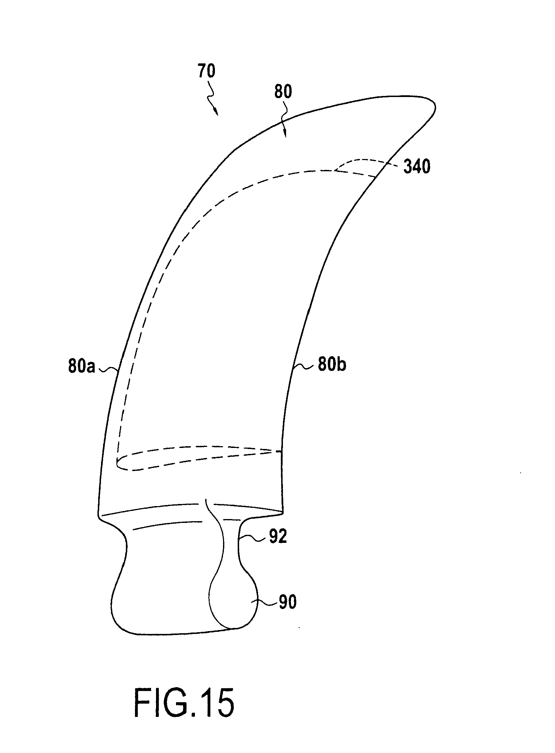

A la fin du tissage, on sectionne, par exemple au jet d'eau sous pression, les fils de chaîne et de trame à la limite de la masse tissée pour extraire l'ébauche 300 représentée sur la figure 13 telle qu'elle est issue du tissage 3D et avant toute conformation. La zone de déliaison 304 ménagée lors du tissage permet de former deux portions 310 et 311 tissées indépendamment l'une de l'autre délimitant la cavité 304a à l'intérieur de l'ébauche 300. La cavité 304a est ouverte sur le bord sur le bord arrière 300b de l'ébauche 300 qui correspond à la partie destinée à former le bord de fuite 80b de la structure à profil aérodynamique 20 (figure 15).

Conformément à l'invention, le bord avant 300a de l'ébauche fibreuse 300, qui relie des deux portions 310 et 311 et destiné à former le bord d'attaque 80a (figure 15) de la structure à profil aérodynamique de la pale d'hélice, ne comporte pas de déliaison. En reliant les deux portions 310 et 311 par un tissage continu au niveau du bord avant 100a, la structure à profil aérodynamique de la pale d'hélice comporte un renfort fibreux homogène au niveau du bord d'attaque afin de renforcer sa résistance vis-à-vis d'éventuels impacts.

Sur la figure 13, la conformation de l'ébauche fibreuse 300 en une préforme de la structure à profil aérodynamique, est réalisée en introduisant dans la cavité 304a une pièce de conformation en matériau rigide alvéolé 340.

Une fois la pièce de conformation introduite dans la cavité 304a, on procède à la densification de la préforme fibreuse de la structure à profil aérodynamique comme décrit précédemment.

On obtient alors telle que représentée sur la figure 15, une pale d'hélice 70 qui comprend, en une seule pièce en matériau composite (renfort fibreux densifié par une matrice), une structure à profil aérodynamique 80 ayant un bord d'attaque 80a et un bord de fuite 80b, une échasse 92 et un pied 90. La pièce de conformation 240 en matériau rigide alvéolé est en outre présente à l'intérieur de la structure à profil aérodynamique.

## Revendications

1. Pale d'hélice d'aéronef comprenant une structure à profil aérodynamique (20) **caractérisée en ce que** la structure à profil aérodynamique comprend au moins un renfort fibreux (100) constitué d'une pluralité de couches de fils de chaîne et de couches de fils de trame, les fils de chaîne étant liés par des fils de trame suivant un tissage tridimensionnel et densifié par une matrice et une pièce de conformation (140) en matériau rigide alvéolé de forme déterminée, le renfort comportant au moins deux portions (110 et 111) liées entre elles par tissage continu au niveau du bord d'attaque (20a) de la pale d'hélice (10), les deux portions (110, 111) enserrant ladite pièce de conformation (140), et **en ce que** les deux portions (110, 111) du renfort fibreux (100) sont partiellement séparées par une zone de déliaison (104), obtenue lors du tissage tridimensionnel.

2. Pale selon la revendication 1, **caractérisée en ce qu'**elle comprend en outre une poutre (150) dont une première partie (151, 152) est disposée à l'intérieur de la structure à profil aérodynamique et entourée au moins partiellement par la pièce de conformation (140) et une deuxième partie (153, 154) s'étendant à l'extérieur de ladite structure, ladite deuxième partie comportant à son extrémité un pied de pale (30).

3. Pale selon la revendication 2, **caractérisée en ce que** la poutre (150) est formée d'un renfort fibreux densifié par une matrice.

4. Pale selon la revendication 2 ou 3, **caractérisée en ce que** la première partie de la poutre comporte une portion renflée (152) formant un élément de retenue (33) de la poutre dans la structure à profil aérodynamique (20).

5. Pale selon la revendication 1 ou 2, **caractérisée en ce qu'**elle comprend en outre un pied de pale (90) formé d'un renfort fibreux (312) densifié par une matrice, le renfort fibreux (312) du pied de pale (90) étant tissé en continu avec le renfort fibreux (310) de la structure à profil aérodynamique (80).

6. Pale selon l'une quelconque des revendications 1 à 5, **caractérisée en ce que** les deux portions (210, 211) du renfort fibreux (200) comportent au moins une surépaisseur (203) sur leur face en regard formant des raidisseurs.

7. Pale selon l'une quelconque des revendications 1 à 6, **caractérisé en ce que** la structure à profil aérodynamique (20) comprend un renfort en fibres de carbone densifié par une matrice carbone.

8. Procédé de fabrication d'une pale d'hélice d'aéronef (10) comprenant au moins:
- la réalisation d'une ébauche fibreuse (100) en une seule pièce par tissage tridimensionnel de fils, ladite ébauche comprenant au moins une première partie comportant au moins deux portions liées (110, 111) entre elles par tissage continu au niveau du bord d'attaque (20a) de la pale d'hélice (10), les deux portions (110, 111) de l'ébauche fibreuse (100) étant partiellement séparées par formation d'une zone de déliaison (104) lors du tissage tridimensionnel.
- la formation d'une pièce de conformation (140) en matériau rigide alvéolé de forme déterminée,
- mise en forme de l'ébauche fibreuse (100) par enserrement de la pièce de conformation (140) entre les deux portions (110, 111) de l'ébauche fibreuse (100) pour obtenir une préforme de structure à profil aérodynamique,
- la densification de la préforme par une matrice pour obtenir une structure à profil aérodynamique (20) ayant un renfort fibreux constitué par ladite préforme et densifié par la matrice.

9. Procédé selon la revendication 8, **caractérisé en ce qu'**il comprend en outre la réalisation d'une poutre (150) par tissage tridimensionnel d'une ébauche fibreuse et par densification de ladite ébauche par une matrice pour obtenir une poutre en matériau composite ayant un renfort fibreux densifié par la matrice, ladite poutre comprenant un mât (151) et un pied de pale (153) et, lors de la mise en forme de l'ébauche fibreuse, la disposition du mât de la poutre entre les deux portions (110, 111) de l'ébauche fibreuse (100), ledit mât étant entouré au moins partiellement par la pièce de conformation (140).

10. Procédé selon la revendication 8, **caractérisé en ce qu'**il comprend, la formation d'au moins une portion renflée (152) sur le mât (151) d'une poutre (150), ladite portion renflée étant réalisée en faisant varier le titre et/ou la contexture des fils de l'ébauche ou par introduction d'un insert lors du tissage tridimensionnel.

11. Procédé selon la revendication 8, **caractérisé en ce que** une ébauche fibreuse d'une poutre (170) est tissée sous forme d'une bande fibreuse (160), ladite bande étant repliée autour d'un insert (161) pour former le pied de pale, une pièce d'âme (162) en matériau rigide alvéolé étant insérée entre les deux parties repliées de la bande fibreuse.

12. Procédé selon la revendication 8, **caractérisé en ce que** l'ébauche fibreuse (300) comprend en outre une deuxième partie (312) tissée en continu avec la première partie de ladite ébauche et **en ce que** ladite deuxième partie forme, après densification, un pied de pale (90).

13. Turbopropulseur équipé d'une pale d'hélice (10) selon l'une quelconque des revendications 1 à 7 ou fabriquée selon le procédé de l'une quelconque des revendications 8 à 12.

14. Aéronef équipé d'au moins un turbopropulseur selon la revendication 13.

## Patentansprüche

1. Propellerblatt eines Flugzeugs, das eine Struktur mit aerodynamischem Profil (20) aufweist, **dadurch gekennzeichnet, dass** die Struktur mit aerodynamischem Profil wenigstens eine Faserverstärkung (100), die von einer Vielzahl von Schichten aus Kettfäden und von Schichten aus Schussfäden gebildet ist, wobei die Kettfäden durch Schussfäden entsprechend einem dreidimensionalen Weben verbunden sind, und die durch eine Matrix verdichtet ist, sowie ein Formungsteil (140) aus starrem wabenartigem Material mit bestimmter Form umfasst, wobei die Verstärkung wenigstens zwei Abschnitte (110 und 111) umfasst, die durch durchgehendes Weben im Bereich der Vorderkante (20a) des Propellerblattes (10) untereinander verbunden sind, wobei die beiden Abschnitte (110, 111) das Formungsteil (140) umschließen, und dass die beiden Abschnitte (110, 111) der Faserverstärkung (100) durch einen Lösebereich (104), der während des dreidimensionalen Webens erhalten wird, teilweise getrennt sind.

2. Blatt nach Anspruch 1, **dadurch gekennzeichnet, dass** es ferner einen Träger (150) umfasst, von dem ein erster Teil (151, 152) innerhalb der Struktur mit aerodynamischem Profil angeordnet und von dem Formungsteil (140) wenigstens teilweise umgeben ist und wobei ein zweiter Teil (153, 154) sich außerhalb der Struktur erstreckt, wobei der zweite Teil an seinem Ende einen Blattfuß (30) umfasst.

3. Blatt nach Anspruch 2, **dadurch gekennzeichnet, dass** der Träger (150) von einer durch eine Matrix verdichteten Faserverstärkung gebildet ist.

4. Blatt nach Anspruch 2 oder 3, **dadurch gekennzeichnet, dass** der erste Teil des Trägers einen bauchigen Abschnitt (152) umfasst, der ein Element zum Halten (33) des Trägers in der Struktur mit aerodynamischem Profil (20) bildet.

5. Blatt nach Anspruch 1 oder 2, **dadurch gekennzeichnet, dass** es ferner einen Blattfuß (90) umfasst, der von einer durch eine Matrix verdichteten Faserverstärkung (312) gebildet ist, wobei die Faserverstärkung (312) des Blattfußes (90) mit der Faserverstärkung (310) der Struktur mit aerodynamischem Profil (80) durchgehend gewebt ist.

6. Blatt nach einem der Ansprüche 1 bis 5, **dadurch gekennzeichnet, dass** die beiden Abschnitte (210, 211) der Faserverstärkung (200) wenigstens eine Überdicke (203) auf ihrer gegenüberliegenden Seite umfassen, die Versteifungen bildet.

7. Blatt nach einem der Ansprüche 1 bis 6, **dadurch gekennzeichnet, dass** die Struktur mit aerodynamischem Profil (20) eine Verstärkung aus Kohlenstofffasern, die durch eine Kohlenstoff-Matrix verdichtet ist, umfasst.

8. Verfahren zur Herstellung eines Flugzeug-Propellerblattes (10), das wenigstens umfasst:
- das Herstellen eines einstückigen Faserrohlings (100) durch dreidimensionales Weben von Fäden, wobei der Rohling wenigstens einen ersten Teil aufweist, der wenigstens zwei Abschnitte (110, 111) umfasst, die durch durchgehendes Weben im Bereich der Vorderkante (20a) des Propellerblattes (10) untereinander verbunden sind, wobei die beiden Abschnitte (110, 111) des Faserrohlings (100) durch Bildung eines Lösebereichs (104) während des dreidimensionalen Webens teilweise getrennt werden,
- das Ausbilden eines Formungsteils (140) aus starrem wabenartigem Material mit bestimmter Form,
- Informbringen des Faserrohlings (100) durch Einschließen des Formungsteils (140) zwischen den beiden Abschnitten (110, 111) des Faserrohlings (100), um einen Strukturvorformling mit aerodynamischem Profil zu erhalten,
- das Verdichten des Vorformlings durch eine Matrix, um eine Struktur mit aerodynamischem Profil (20), die eine durch den Vorformling gebildete und durch die Matrix verdichtete Faserverstärkung hat, zu erhalten.

9. Verfahren nach Anspruch 8, **dadurch gekennzeichnet, dass** es ferner das Herstellen eines Trägers (150) durch dreidimensionales Weben eines Faserrohlings und durch Verdichten des Rohlings durch eine Matrix, um einen Träger aus Verbundwerkstoff mit einer durch die Matrix verdichteten Faserverstärkung zu erhalten, wobei der Träger einen Stiel (151) und einen Blattfuß (153) umfasst, sowie, während des Informbringens des Faserrohlings, das Anordnen des Stiels des Trägers zwischen den beiden Abschnitten (110, 111) des Faserrohlings (100) umfasst, wobei der Stiel von dem Formungsteil (140) wenigstens teilweise umgeben ist.

10. Verfahren nach Anspruch 8, **dadurch gekennzeichnet, dass** es die Bildung wenigstens eines bauchigen Abschnitts (152) an dem Stiel (151) eines Trägers (150) umfasst, wobei der bauchige Abschnitt durch Variieren der Feinheit und/oder der Fadendichte der Fäden des Rohlings oder durch Einführen eines Einsatzes während des dreidimensionalen Webens ausgebildet wird.

11. Verfahren nach Anspruch 8, **dadurch gekennzeichnet, dass** ein Faserrohling eines Trägers (170) in Form eines Faserbandes (160) gewebt wird, wobei das Band um einen Einsatz (161) umgeschlagen wird, um den Blattfuß zu bilden, wobei ein Kernstück (162) aus starrem wabenartigem Material zwischen den beiden umgeschlagenen Teilen des Faserbandes eingefügt wird.

12. Verfahren nach Anspruch 8, **dadurch gekennzeichnet, dass** der Faserrohling (300) ferner einen zweiten Teil (312) umfasst, der mit dem ersten Teil des Rohlings durchgehend gewebt ist, und dass der zweite Teil nach Verdichten einen Blattfuß (90) bildet.

13. Turboprop-Triebwerk, das mit einem Propellerblatt (10) nach einem der Ansprüche 1 bis 7 oder hergestellt nach dem Verfahren von einem der Ansprüche 8 bis 12 ausgestattet ist.

14. Flugzeug, das mit wenigstens einem Turboprop-Triebwerk nach Anspruch 13 ausgestattet ist.

## Claims

1. An aircraft propeller blade (10) comprising an airfoil-profile structure (20), the blade being **characterized in that** the airfoil-profile structure comprises at least one fiber reinforcement (100) obtained by three-dimensional weaving of yarns and densified by a matrix, and a shaping part (140) made of cellular rigid material of determined shape, the reinforcement comprising at least two halves (110, 111) linked together 10 by continuous weaving in the leading edge (20a) of the propeller blade (10), the two halves (110, 111) fitting tightly around said shaping part (140), and **in that** the two halves (110, 111) of the fiber reinforcement (100) are partially separated by a non-interlinked region (104) that is obtained during the three-dimensional weaving.

2. A blade according to daim 1, **characterized in that** it further comprises a beam (150) having a first portion (151, 152) arrangea inside the airfoil-profile structure and surrounded at least in part by the shaping part (140), and a second portion (153, 154) extending outside said structure, said second portion including a blade 20 root (30) at its end.

3. A blade according to claim 2, **characterized in that** the beam (150) is formed by fiber reinforcement densified by a matrix.

4. A blade according to claim 2 or claim 3, **characterized in that** the first portion of the beam includes an enlarged portion (152) forming a retaining element (33) for retaining the beam in the airfoil-profile structure(20).

5. A blade according to claim 1 or claim 2, **characterized in that** it further comprises a blade root (90) formed by fiber reinforcement (312) densified by a matrix, the fiber reinforcement (312) of the blade root (90) being woven continuously with the fiber reinforcement (310) of the airfoil-profile structure (80).

6. A blade according to any one of claims 1 to 5, **characterized in that** the two halves (210, 211) of the fiber reinforcement (200) include at least one stiffener-forming extra thickness (203) on their facing faces.

7. A blade according to any one of claims 1 to 6, **characterized in that** the airfoil-profile structure (20) comprises carbon fiber reinforcement densified by a carbon matrix.

8. A method of fabricating an aircraft propeller blade (10), the method comprising at least:
• making a single-piece fiber blank (100) by three-dimensional weaving of yarns, said blank comprising at least a first portion comprising at least two halves (110, 111) that are linked together by continuous weaving in the leading edge (20a) of the propeller blade (10), the two halves (110, 111) of the fiber blank (100) being separated in part by forming a non-interlinked region (104) during the three-dimensional weaving;
• forming a shaping part (140) of determined shape and made of cellular rigid material;
• shaping the fiber blank (100) by containing the shaping piece (140) between the two halves (110, 111) of the fiber blank (100) in order to obtain a preform for an airfoil-profile structure; and
• densifying the preform with a matrix in order to obtain an airfoil-profile structure (20) having fiber reinforcement constituted by said preform and densified by the matrix.

9. A method according to claim 8, **characterized in that** it further includes making a beam (150) by three-dimensionally weaving a fiber blank and by densifying said blank with a matrix in order to obtain a beam of composite material having fiber reinforcement densified by the matrix, said beam comprising a mast (151) and a blade root (153), and during shaping of the fiber blank, placing the mast of the beam between the two halves (110, 111) of the fiber blank (100), said mast being surrounded at least in part by the shaping part (140) .

10. A method according to claim 8, **characterized in that** it includes forming at least one enlarged portion (152) on the mast (151) of a beam (150), said enlarged portion being made by varying the weight and/or the thread count of the yarns of the blank or by incorporating an insert during three-dimensional weaving.

11. A method according to claim 8, **characterized in that** a fiber blank (170) of a beam is woven in the form of a fiber strip (160), said strip being folded around an insert (161) to form the blade root, a core part (162) of cellular rigid material being inserted between the two folded-together portions of the fiber strip.

12. A method according to claim 8, **characterized in that** the fiber blank (300) further includes a second portion (312) woven continuously with the first portion of said blank, and **in that**, after densification, said second portion forms a blade root (90).

13. A turboprop fitted with a propeller blade (10) according to one of claims 1 to 7, or fabricated by the method according to any one of claims 8 to 12.

14. An aircraft fitted with at least one turboprop according to claim 13.
